# EUROPEAN PATENT APPLICATION

(11) **EP 1 413 525 A1**
(43) Date of publication of application: **28.04.2004**
(21) Application number: 03425691.7
(22) Date of filing: 22.10.2003
(51) Int. Cl.: B65D 47/32, G01F 11/26

(54) **Pourer**

(30) Priority: 24.10.2002 IT tr20020004 U
(71) Applicant: Advanced Technology S.r.l., 05100 Terni (IT)
(72) Inventor: Paparoni, Mauro, 05100 Terni (IT); Campioni, Fulvio, 05100 Terni (IT)
(74) Representative: Baldi, Claudio, Ing.

(57) **Abstract**

The present invention relates to a pourer used in oil bottles, composed of a tubular cylindrical body with a capillary conduit (2) for oil distribution and provided with an air chamber (3) that communicates with the inside of the bottle and houses a float (4) designed to be pushed by the oil that invades the air chamber when the bottle is turned upside down.

## Description

The present patent application for industrial invention relates to a pourer used in oil bottles.

Edible oil bottles feature caps provided with beaks or small tubes that allow the user to control the oil flow coming out of the bottle when seasoning food.

Traditional caps, however, do not permit a real control on the quantity of oil coming out of the bottle.

The impossibility of controlling the oil flow has resulted in two main inconveniences of economic and dietetic, respectively.

The first inconvenience is basically related to the fact that a totally uncontrolled oil flow often corresponds to the use of an excessive amount of oil compared to the real need. In other words, the user of traditional oil bottles frequently risks to waste significant quantities of this expensive product.

The second and equally significant inconvenience is related to the fact that excessive seasoning is detrimental for the user's health.

The purpose of the invention is to obtain a special pourer capable of being used with any type of oil bottle, which ensure strict control of the quantity of product (or dose) dispensed when turning the oil bottle upside down.

In this way, after providing the oil bottle with the pourer of the invention, the user can be sure not to exaggerate, not even accidentally, when dispensing oil for seasoning purposes.

On one hand, this prevents useless waste of this expensive product and on the other hand, contributes to a healthier diet.

Practically speaking, the pourer of the invention has been devised after a careful examination of how liquids contained in a bottle are poured.

After removing the cap and turning the bottle upside down, an outgoing flow of liquid can be observed in the bottle opening, together with an incoming flow of air that tends to occupy the internal space left free by the liquid.

The air flow that is gradually introduced in the bottle prevents the creation of a depression in the bottle that would prevent the liquid from being poured outside.

The spontaneous introduction of air inside of the turned-upside down bottle, during the distribution of the oil, would empty the bottle suddenly and completely, if it wasn't for the user's action, who changes the position of the bottle as soon as he believes to have poured a sufficient quantity of oil.

Since the quantity of liquid coming out of the bottle depends on the quantity of air that is simultaneously introduced in the bottle, the idea of the present invention is to adjust the quantity of liquid coming out of the bottle every time the bottle is turned upside down according to the quantity of air that is introduced in the bottle.

From this perspective, it can be said that the pourer of the invention can dose the oil coming out of the bottle as desired by dosing the air that can actually penetrate the bottle when the same is turned upside down.

It appears evident that every time the user turns the bottle upside down, the quantity of oil coming out of the bottle shall be exactly the same as the quantity of air introduced in the bottle by the pourer of the invention.

Moreover, the pourer of the invention can be produced in different versions characterised by the ability of "dosing" a specific quantity of air and, consequently, causing the distribution of a quantity of oil having exactly the same volume.

This result can be obtained by the pourer of the invention thanks to the fact that it obstructs the passage section of the bottle and incorporates a small internal chamber acting as a sort of "lung" that is alternatively filled with air or oil according to the position of the bottle.

In particular, the internal chamber is filled with air when the bottle is in vertical position. As soon as the bottle is tilted to pour the oil, the internal chamber tends to fill up with the oil coming down towards the opening of the bottle and, simultaneously, release the air contained in the chamber.

In view of the fact that the pouring off section left by the pourer of the invention for the oil coming out of the bottle is rather small, it can be easily understood - also because of oil high density - that the same hole cannot be used by external air to spontaneously enter the bottle.

This means that the only air that can actually penetrate the internal space of the bottle (thus contributing to oil distribution) is the air that was previously contained in the internal chamber of the pourer of the invention.

On the other hand, it appears evident that oil distribution cease spontaneously when a dose with same volume as the air that penetrated the internal space of the bottle from the internal chamber of the pourer is reached.

As a matter of fact, being it impossible to introduce more air, a depression is created inside the bottle, preventing additional oil from being poured, regardless of the fact that the bottle is maintained in upside-down position.

It is easy to understand that an additional dose of oil can be poured only after replacing the bottle in vertical position to allow the internal chamber of the pourer of the invention to fill up with a new dose of air that shall determine the distribution of an additional dose of oil with same volume.

The operation of the pourer of the invention is optimised by the presence of a float in the internal chamber/lung.

The use of floats with different volumes allows for adjusting the quantity of air introduced in the internal chamber, without having to change the structure of the internal chamber, thus adjusting the measurement of the oil dose poured from the bottle.

For major clarity the description of the invention continues with reference to the enclosed drawings, which are intended for purposes of illustration and not in a limiting sense, whereby:

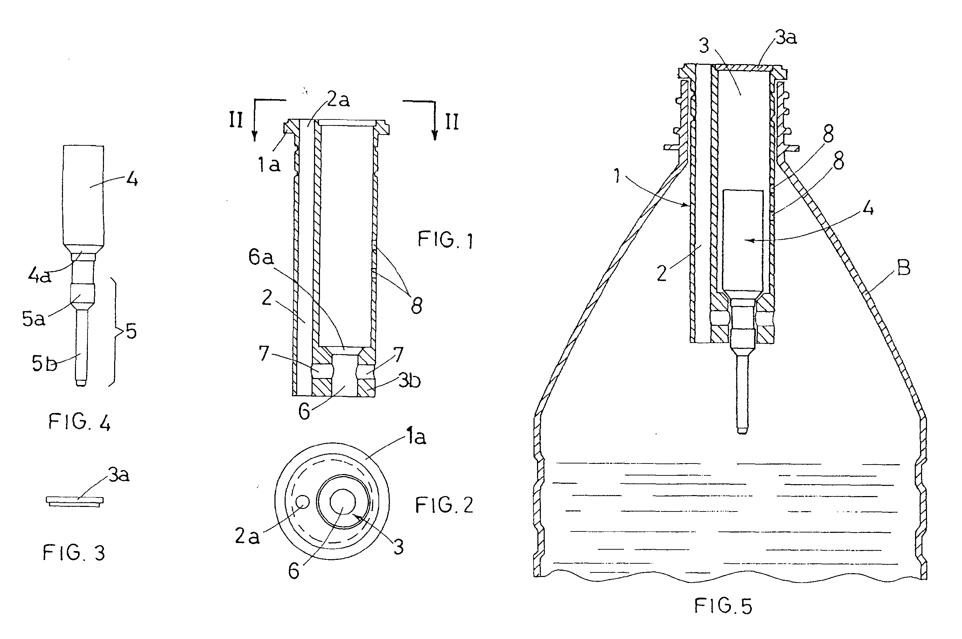

- Fig. 1 is a section of the bearing structure of the pourer of the invention;
- Fig. 2 is a top view of the bearing structure;
- Fig. 3 is a side view of the hermetic cap of the bearing structure;
- Fig. 4 is a view of the float provided with the pourer;
- Figs. 5, 6 and 7 show an oil bottle provided with the pourer of the invention in three different operating steps.

With reference to the aforementioned figures, the pourer (1), which can be indifferently made of plastic or metal, is composed of a tubular cylindrical body designed to be exactly inserted into the opening of the oil bottle (B) until the top collar (1a), which protrudes on the perimeter, touches the edge of the bottle hole.

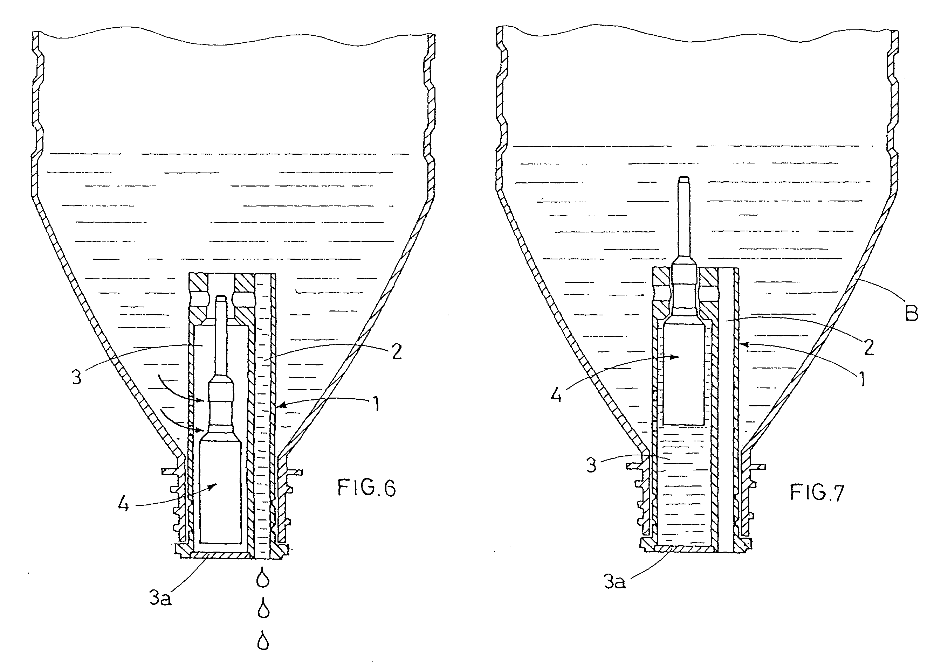

The tubular body of the pourer (1) axially contains in parallel position a narrow through conduit (2) - that is to say, a capillary vessel - that ends on top of the pourer with a hole (2a) and a chamber with larger section (3) closed by a hermetic cap (3a) on top and by a thick wall (3b) on the bottom; it being provided that the hole (2a), together with the hermetic cap (3a), is basically located at the same height as the collar (1a), that is to say at the height of the standard distribution hole of the bottle (B), as shown in Figs. 5, 6, and 7.

Once the pourer (1) has been inserted into the neck of the bottle (B), the only opening available for the oil flow is represented by the small hole (2a) located on top of the capillary vessel (2).

The chamber (3) houses the body of a float (4) that occupies the entire section and ends with a central pin (5) with variable section, capable of being inserted into a suitable hole (6) that vertically goes across the bottom wall (3b) of the chamber (3) and is able to guide its alternate travels.

It must be noted that the hole (6) perpendicularly intersects a small conduit (7) located in horizontal position on the bottom wall (3a) of the chamber (3) and ending on the side of the pourer (1).

In particular, the float (4) has a lower truncated cone profile (4a) that allows it to be joined to a first section (5a), with larger section, of the pin (5) joined in turn to a second ending section (5b) with lower section.

With reference to Fig. 5, when the bottle (1) is in vertical position and the oil level is lower than the bottom of the pourer (1), the internal chamber (3) is filled up with air.

It is the same external air that penetrates the bottle (B) through the capillary vessel (2) and enters the chamber (3) through the through holes (8) located on the side of the pourer (1).

In this situation, because of gravity the float (4) housed in the chamber (3) occupies a lower limit position, in which the lower truncated cone profile (4a) touches the corresponding opening (6a) of the hole (6) located on the bottom of the chamber (3).

The ending section (5b) of the pin (5) completely projects from the bottom of the chamber (3), while the upper section (5b) occupies the section of the hole (6) that intersects the horizontal conduit (7).

With reference to Fig. 6, when the bottle (B) is turned upside down, because of gravity the float (4) tends to slide until it touches the hermetic cap (3a) of the chamber (3); this means that the pin (5) frees most of the passage section of the hole (6) located on the bottom of the chamber (3).

Once the oil contained in the bottle in upside down position flows towards the neck of the bottle, the pourer (1) is immersed in oil and penetrates the chamber (3), especially through the lateral holes (8).

The entrance of the oil causes the exit of the air that previously filled up the chamber (3) through the vertical hole (6) located on the bottom of the chamber (3), and also through the horizontal conduit (7) that intersects it.

The air flows in the bottle (B) favouring the pouring off of a dose of oil equal to its volume through the capillary vessel (2).

Once the dose has been poured, the distribution of additional quantities of oil is prevented, since the external air cannot flow back into the bottle (B), being the narrow section of the capillary vessel (2) completely occupied by oil.

While the chamber (3) is filled up with oil, the float (4) gradually returns towards the bottom wall (3a) of the chamber (3), until the truncated cone profile (4a) of the lower section touches the corresponding opening (6a) of the vertical hole (6) of the chamber (3), as shown in Fig. 7.

Based on the aforementioned description, it can be noted that the volume of the following doses of oil distributed by the pourer (1) corresponds to the volume of the space that is left free by the float (4) inside the chamber (3).

In view of the above, it is possible to adjust the capacity of the following doses of oil distributed by the pourer (1) without modifying the internal and external dimensions of the chamber (3), by simply changing the length of the body of the float (4) housed in the chamber (3) and consequently the volume of the space that is left free inside the chamber (3).

It must be noted that a space is needed between the various sections of the float (4) and the pin (5) and the corresponding sections of the hole (6) located on the bottom of the chamber (3), as shown in Figs. 5 and 7.

This is because the spaces between the float (4) and the hole (6) allow oil leakage from the chamber (3) towards the inside of the bottle (B), which favours the effective emptying of the chamber (3), as well as the free sliding of the float (4).

Finally, it must be noted that, although the present description refers to a pourer used for oil distribution, no impediments exist to use the same pourer for the distribution of different liquids.

Likewise, the same pourer can be advantageously used not only in combination with bottles, but also with different containers of liquids, as long as they are provided with a similar opening.

## Claims

1. Pourer for liquids, **characterised in that** it is composed of a tubular cylindrical body capable of being exactly inserted into the opening of a bottle (B) and provided with a top collar (1 a) projecting on the perimeter; it being provided that the tubular body axially contains in parallel position a through capillary vessel (2), which ends on top of the pourer (1) with a hole (2a), and a chamber with larger section (3) closed by a hermetic cap (3a) and bordered by a thick wall (3b) on the bottom (3b), communicating with the outside by means of two holes with horizontal axis (8) located near the top; it being provided that the bottom wall (3b) of the chamber (3) is provided with a through vertical hole (6).

2. Pourer as defined in claim 1, **characterised in that** the vertical hole (6) on the bottom wall (3b) of the chamber (3) intersect a conduit (7) with vertical axis located on the bottom wall (3b), ending on the side of the chamber (3) under the through holes (8).

3. Pourer as defined in claim 1, **characterised in that** the chamber (3) houses a float (4) joined on the bottom with a pin (5) made up of two different sections (5a, 5b) with decreasing section from above downwards; it being provided that the vertical hole (6) on the bottom wall (3b) of the chamber (3) has a section capable of receiving the upper section (5a) of the pin (5) with some space and a special opening (6a) capable of receiving the lower section (4a) of the float (4), with some space.
